# EUROPÄISCHE PATENTSCHRIFT

(11) **EP 0 475 956 B1**
(45) Veröffentlichungstag und Bekanntmachung des Hinweises auf die Patenterteilung: **25.10.1995**
(21) Anmeldenummer: 90906946.0
(22) Anmeldetag: 02.05.1990
(51) Int. Cl.: B23K 35/36

(54) **PASTÖSES GEMISCH ZUM VERBINDEN ODER BESCHICHTEN VON METALLISCHEN WERKSTOFFEN**
PASTE-LIKE MIXTURE FOR JOINING OR COATING METALLIC MATERIALS
MELANGE PATEUX POUR JOINDRE OU REVETIR DES MATERIAUX METALLIQUES

(30) Priorität: 12.05.1989 DE 3915515
(43) Veröffentlichungstag der Anmeldung: 25.03.1992
(73) Patentinhaber: CASTOLIN S.A., CH-1025 Lausanne - St. Sulpice (CH)
(72) Erfinder: DUDEL, Klaus, CH-1025 St.-Sulpice (CH)
(74) Vertreter: Hiebsch, Gerhard F., Dipl.-Ing.
(86) Internationale Anmeldenummer: EP9000700
(87) Internationale Veröffentlichungsnummer: WO9013393

(56) Entgegenhaltungen:
- EP-A- 0 036 594
- EP-A- 0 225 465
- DE-B- 1 239 914
- FR-A- 2 617 074
- GB-A- 2 019 443
- US-A- 3 073 270
- US-A- 4 475 959
- Merkblatt DSV 2605 (April 1978), Deutscher Verband für Schweisstechnik e.V.

## Beschreibung

Die Erfindung betrifft ein pastöses Gemisch zum Verbinden oder Beschichten von metalischen Werkstoffen, insbesondere von Aluminium und Aluminiumlegierungen, mit eine Zusatzwerkstoff und eine Bindemittel. Zudem erfaßt die Erfindung ein Verfahren zum Herstellen des Gemisches.

Bei allen Arten von Löt- und Schweißprozessen werden Zusatzwerkstoffe und Flußmittel eingesetzt.

Flußmittel können in Lösung vorliegen, in Suspension, als Pate, z.B. zusammen mit pulverförmigen Zusatzwerkstoffen, oder auch als trockenes Pulver. Man kennt ferner auch Beschichtungen von Flußmitteln z.B. auf Lotlegierungen. Die Zusatzwerkstoffpulver werden vorwiegend in Form von Pasten oder als Formkörper verwendet.

Da jedoch Flußmittel im allgemeinen kristallin sind, d.h. keine Tendenz zur Bildung zähflüssiger Lösungen oder Gallerten zeigen, und daher kaum Bindekräfte aufweisen, sind die mechanischen Eigenschaften, insbesondere die Stabilität von Pasten, Beschichtungen und Formteilen für viele Anwendungen nicht ausreichend.

Beispielsweise sind Flußmittelbeschichtungen auf Hart-Lötstäben häufig so instabil, daß selbst beim normalen Transport und einwandfreier Verpackung Schäden an der Flußmittelhüllung nicht ausbleiben. Die rationelle Herstellung von Formteilen zum exakten Dosieren von Flußmittel und/oder Zusatzwerkstoff scheitert ebenfalls an der mechanischen Festigkeit. Zusatzwerkstoffpasten sind des relativ hohen spezifischen Gewichtes der Metalle wegen schwierig in gut fließfähiger und doch stabiler Form zu erhalten.

Deshalb setzt man in der Praxis meist Hilfsstoffe wie lösliche Silikate, quellbare Schichtsilikate -- beispielsweise Bentonit --, zähflüssige, lösliche Naturprodukte wie Gelatine, Alginate oder entsprechende Kunststoffe ein.

Eine Übersicht von Bindmmitteln für pulverförmige Lote gibt etwa das Merkblatt DVS 2605 (April 1978) des Deutschen Verbandes für Schweisstechnik an.

Die Verwendung der bekannten Hilfsstoffe führt jedoch dazu, daß deren Rückstände den Lötvorgang fast immer stark beeinträchtigen, vor allem in Arbeitstemperaturbereichen unter 700°C. Sie verringern insbesondere die Wirksamkeit des Flußmittels ganz erheblich und behindern das Fließen des Lotes. Dies erfordert eine unerwünschte Steigerung der Arbeitstemperatur, die zudem oft unzureichende Auswirkungen hat, und führt zu einer Zunahme des Ausschußanteils. Vor allem bei Lotpasten sind die bekannten Hilfsmittel wenig geeignet, eine stabile Suspension zu bilden.

Die im DVS-Merkblatt 2605 erwähnten Bindemittel ergeben vor allem in Verbindung mit flußmitten auf Kaliumfluorid - bzw. Aluminiumfluorid-Basis stark störende schwarze Rückstände, die den Lötvorgang erheblich behindern. Gleichermaßen verhalten sich etwa bekannte Aethylen-Propylenmischpolymerisate.

In der Praxis entstanden wegen der Zersetzungsrückstände bekannter Bindemittel -- trotz deren behaupteter Rückstandsarmut -- fehlerhafte Lötungen. Auch schlugen Versuche fehl, mit Alkohol verdünnte Polyglykole als Bindemittel einzusetzen.

Der GB-A 2 019 443 sind beispielsweise Schweiß- oder Lotpasten mit getrocknetem Propylen und -- ebenfalls getrocknetem -- Hexanol zu entnehmen. In Beziehung auf eine von anorganischen Metallsalzen freie Lotpaste nennt die EP-A 225 465 als eine von mehreren Flüssigkeiten zur Verhinderung eines Schlickers Propylenglykol.

In Kenntnis dieses Standes der Technik hat sich nun der Erfinder das Ziel gesetzt, die Nachteile der bekannten Lötmaterialien zu beseitigen und stabile Pasten aus pulverförmigen Zusatzwerkstoffen und/oder Flußmitteln --insbesondere für die Behandlung von Aluminium und deren Legierungen -- zu schaffen, die beim Löten oder Schweißen keinerlei störende Rückstände und Nebenwirkungen ergeben.

Zur Lösung dieser Aufgabe führt die Lehre des Patentanspruches 1; das erfindungsgemäße Löt- oder Schweißmaterial enthält als Bindemittel reines Monopropylenglycol ohne hohe molekulare Anteile des Bindemittels, das eine Reinheit über 92,6% -- bevorzugt 99.5% -- aufweist. Mit diesem Bindemittel entsteht eine stabile Paste, die beim Verlöten zu keinerlei zerstörenden Zersetzungsrückständen führt.

0,5 % bis 0,2 % feinst verteilter Kieselsäure sind tolerierbar, ebenso sehr geringe Mengen an oberflächenaktiven Substanzen bis maximal 0,2 %.

Die Zusammensetzung des verwendeten Lotes liegt bevorzugt im Bereich AlSi 11 bis 13, und das Verhältnis Lotanteil zu Flußmittelanteil zwischen 3 : 1 bis 1 : 3, vorzugsweise 1 : 1,5.

Im Rahmen der Erfindung liegt ein inniges Gemisch aus 50 bis 56, insbesondere 53 bis 55 Gew.-% AlF₃ und 44 bis 50 Gew.-%, bevorzugt 47 bis 45 Gew.-%, Kaliumfluorid als Flußmittel.

Das Verfahren zum Herstellen dieses Materials ist erfindungsgemäß dadurch gekennzeichnet, daß die Zusatzwerkstoff- und/oder Flußmittelkomponenten innig vermischt und homogen mit dem reinen Monopropylenglycol benetzt werden; dann kann die so entstandene Masse die gewünschte Form erhalten.

Die erfindungsgemäße Paste ist streichfähig und extrudier- sowie dosierbar, bei entsprechender Viskositätseinstellung auch tauchbar sowie spritzbar. Beim Spritzen hat es sich allerdings als günstig erwiesen, mit höchstens 20 % primärem, leicht flüchtigem Alkohol zu verdünnen.

## Patentansprüche

1. Pastöses Gemisch zum Verbindung oder Beschichten von metallischen Werkstoffen, insbesondere von Aluminium und Aluminiumlegierungen, mit (a) Zusatzwerkstoff/en, (b) Flußmittel und (c) einem Bindemittel, mit (c) bestehend aus reinem Monopropylenglycol ohne höher molekulare Anteile des Bindemittels, das eine Reinheit über 92,6% aufweist.

2. Gemisch nach Anspruch 1, gekennzeichnet durch oberflächenaktive Substanzen bis 0,2 % oder weniger.

3. Gemisch nach Anspruch 1 oder 2, gekennzeichnet durch eine Zusammensetzung des Zusatzwerkstoffes oder Lotes im Bereich AlSi 11 bis 13.

4. Gemisch nach Anspruch 1 oder 2, gekennzeichnet durch eine innige Mischung aus 50 bis 56 Gew.-% Aluminiumfluorid (AlF₃) und 44 bis 50 Gew.-% Kaliumfluorid (KF) als Flußmittel.

5. Gemisch nach Anspruch 4, gekennzeichnet durch 53 bis 55 Gew.-% AlF₃ und 47 bis 45 Gew.-% KF des Flußmittels.

6. Gemisch nach einem der Ansprüche 1 bis 5, gekennzeichnet durch ein Verhältnis von Lotanteil zu Flußmittelanteil zwischen 3 : 1 bis 1 : 3, vorzugsweise 1 : 1,5.

7. Gemisch nach einem der Ansprüche 1 bis 6, dadurch gekennzeichnet, daß das Bindemittel Monopropylenglycol eine Reinheit von 99,5 % aufweist.

8. Verfahren zum Herstellen eines Materials nach wenigstens einem der voraufgehenden Ansprüche, dadurch gekennzeichnet, daß die Zusatzwerkstoff- und/oder Flußmittelkomponenten innig vermischt und homogen mit reinem Monopropylenglycol benetzt werden, wonach eine Verformung des entstandenen Gemisches durchgeführt wird.

9. Verfahren nach Anspruch 8, gekennzeichnet durch eine Verdünnung des Gemisches mit primärem, leicht flüchtigem Alkohol unter 20 % Anteil.

## Claims

1. Paste-like mixture for joining or coating metallic materials, in particular aluminium and aluminium alloys, with (a) weld metal/s, (b) a flux and (c) a binder, (c) consisting of pure monopropylene glycol without higher molecular fractions of the binder, having a purity of more than 92.6 %.

2. Mixture according to claim 1, characterised by surface-active substances of up to 0.2 % or less.

3. Mixture according to claim 1 or claim 2, characterised by a composition of the weld metal or solder in the region of AlSi 11 to 13.

4. Mixture according to claim 1 or claim 2, characterised by an intimate mixture of 50 to 56 % by weight aluminium fluoride (AlF₃) and 44 to 50 % by weight potassium fluoride (KF) as the flux.

5. Mixture according to claim 4, characterised by 53 to 55 % by weight AlF₃ and 47 to 45 % by weight KF as the flux.

6. Mixture according to one of claims 1 to 5, characterised by a ratio of solder to flux of between 3 : 1 and 1 : 3, preferably 1 : 1.5.

7. Mixture according to one of claims 1 to 6, characterised in that the binder monopropylene glycol has a purity of 99.5 %.

8. Process for the manufacture of a material according to at least one of the preceding claims, characterised in that the weld metal and/or flux constituents are intimately mixed and homogeneously wetted with pure monopropylene glycol, after which the resultant mixture is shaped.

9. Process according to claim 8, characterised by diluting the mixture with primary, highly volatile alcohol to a content of less than 20 %.

## Revendications

1. Mélange pâteux pour l'assemblage ou le revêtement de matériaux métalliques, en particulier d'aluminium et d'alliages d'aluminium, avec
- (a) un matériau d'apport/des matériaux d'apport, (b) un fondant et
- (c) un liant, (c) étant composé de monopropylène glycol pur sans quantités moléculaires importantes de liant, qui présente une pureté supérieure à 92,6 %.

2. Mélange selon la revendication 1, caractérisé par des substances tensioactives jusqu'à 0,2 % ou moins.

3. Mélange selon la revendication 1 ou 2, caractérisé par une composition du matériau d'apport ou du métal d'apport dans la plage AlSi 11 à 13.

4. Mélange selon la revendication 1 ou 2, caractérisé par un mélange intime de 50 à 56 %-poids de fluorure d'aluminium (AlF₃) et de 44 à 50 %-poids de fluorure de potassium (KF) comme fondant.

5. Mélange selon la revendication 4, caractérisé par 53 à 55 %-poids de AlF₃ et 47 à 45 %-poids de KF du fondant.

6. Mélange selon une des revendications 1 à 5, caractérisé par un rapport de la quantité de métal d'apport à la quantité de fondant compris entre 3 : 1 et 1 : 3, de préférence égal à 1 : 1,5.

7. Mélange selon l'une des revendications 1 à 6, caractérisé en ce que le liant monopropylène glycol présente une pureté de 99,5 %.

8. Procédé de fabrication d'un matériau selon au moins une des revendications précédentes, caractérisé en ce que les composantes du métal d'apport et/ou du fondant sont intimement mélangées et humectées de façon homogène avec du monopropylène glycol pur, après quoi un façonnage du mélange réalisé est effectué.

9. Procédé selon la revendication 8, caractérisé par une dilution du mélange avec un alcool primaire légèrement volatil dans une proportion inférieure à 20%.
